# EUROPEAN PATENT SPECIFICATION

(11) **EP 1 361 198 B1**
(45) Date of publication and mention of the grant of the patent: **30.12.2015**
(21) Application number: 03075926.0
(22) Date of filing: 31.03.2003
(51) Int. Cl.: C02F 3/12, C02F 1/78

(54) **Process for treating water and treatment plant**
Verfahren und Vorrichtung zur Wasserbehandlung
Procédé et installation pour le traitement des eaux

(30) Priority: 08.04.2002 DE 10215413
(43) Date of publication of application: 12.11.2003
(73) Proprietor: L'AIR LIQUIDE, Société Anonyme pour l'Etude et l'Exploitation des Procédés Georges Claude, 75007 Paris (FR); Air Liquide GmbH, 40235 Düsseldorf (DE)
(72) Inventor: Gebbet, Adrian, 1390 Nethen (BE); Schwerdt, Jörg, 41564 Kaarst (DE)
(74) Representative: Mellul-Bendelac, Sylvie Lisette

(56) References cited:
- EP-A- 0 835 845
- EP-A- 0 881 195
- WO-A-99/41205
- DE-A- 19 942 184
- US-A- 4 370 235

## Description

The invention relates to a process for treating water in a treatment plant, in particular wastewater in a sewage treatment plant, and to a treatment plant for treating water.

It is known to use biological filters, fixed-bed systems and membrane biologies as a supplement to conventional plant designs in the purification of industrial or domestic wastewaters. The biological processes are affected in this case by introducing substances, for example oxygen or carbon dioxide, into the wastewater.

Thus the oxygen content required for the biological activity can be set by adding pure oxygen and the pH required for the biological activity by adding carbon dioxide. An introduction of ozone in combination with aerobic biological treatment stages is performed to oxidize or decompose poorly degradable substances. The ozone treatment is generally downstream of a biological purification. In partial oxidations, ozone cleaves poorly degradable constituents remaining in the effluent and thus makes them susceptible to a further, inexpensive biological purification.

It is further known to provide a reaction tank and a settling tank in sewage treatment plants, in which case organically degradable materials are degraded by microorganisms in the settling tank and organic material remaining in the settling tank is separated from the water. In this case the material from the separation tank separated from the water is partially recirculated back to the reaction tank.

A disadvantage of this treatment is that the sludge settling in the separation tank cannot be completely recirculated to the reaction tank, since the reaction tank is biologically overloaded as a result of the addition of excesses of concentrated sewage sludge, as a result of which transition to anoxia can occur and as a result of which microorganisms living in the reaction tank can die off.

For this reason it has been necessary to dispose separately of 10 to 20% of the sewage sludge arising in the settling tank which frequently is considered to be special waste. Disposal of this sewage sludge has given rise to high costs which made up up to 30% of the operating costs of a sewage treatment plant.

Secondly it is known to use ozone for treating circulated water, for example in chilling systems of power stations, in order to prevent slime formation in the water as a result of biological activity. Ozone is used here as biocide which does not contribute to salt build up and effectively suppresses the biological activity even at relatively low dosage.

Documents EP835845, DE19942184, US4370235, WO99/41205 and EP881195 disclose procecess for treating water in a treatment plant having a reaction chamber, a subsequent separation chamber and a return stream from the separation chamber to the reaction chamber, said return stream being subjected to a treatment by ozone.

It is therefore an object of the present invention to provide a process for treating water and a treatment plant with which dirty wastewater can be treated in an inexpensive manner, with organic sewage sludge being generated in much lower amounts.

This object is achieved according to the invention by a process for treating water having the features of Claim 1 and by a treatment plant for treating water having the features of Claim 12.

Further advantageous embodiments and developments, each of which can be employed individually or can be combined as desired with one another, are subject-matter of the respective dependent claims.

The inventive process for treating water in a treatment plant, in particular wastewater in a sewage treatment plant, having a reaction chamber in which a biodegradable material present in the water is at least partially biodegraded by microorganisms and having a separation chamber in which the biodegradable material and the microorganisms are at least partially separated from the water, a water stream containing microorganisms and biodegradable material flowing from the reaction chamber to the separation chamber, is characterized in that a return stream containing biodegradable material and a portion of the microorganisms flows from the separation chamber to the reaction chamber and the return stream is subjected to a treatment whose intensity is preset.

The function of the reaction chamber is to degrade the biodegradable material present in the water by microorganisms. In this process the microorganisms feed on the biodegradable material, multiply and decompose or oxidize hydrocarbon compounds of the material with the release of carbon dioxide, water and nitrogen.

It is advantageous if the water containing biodegradable material and microorganisms is kept in constant agitation in the reaction chamber to achieve constant mixing. The agitation of the water ensures particularly good biological activity of the microorganisms.

The function of the separation chamber is to separate the water from the organically degradable material and from the microorganisms. This separation can be achieved, for example, by simple settling of the microorganisms or of the material in a settling tank. The water essentially freed from microorganisms and from the material can be taken off from the separation chamber and if appropriate subjected to a further purification stage.

The microorganisms separated off and the biodegradable material are recirculated back to the reaction chamber. In this case the material and dead microorganisms serve as nutrient for the microorganisms living in the reaction chamber. The living microorganisms taken off from the separation chamber and added to the reaction chamber contribute to the biological activity in the reaction chamber. However, attention must be paid to the fact that a not overabundant or too meagre food supply in the reaction chamber and an excessive or insufficient population of microorganisms lead to interferences in the biological process in the reaction tank.

To avoid transition to anoxia of the water in the reaction chamber, that is to say what is termed the population catastrophe, according to the invention the return stream containing biodegradable material and a portion of the microorganisms is subjected to a treatment whose intensity is preset. In this treatment, at least one factor of three factors, that is to say the feed rate of recirculated organic material, the feed rate of living microorganisms and/or the feed rate of dead microorganisms, is taken into account. A feed rate is defined as the amount flowing into the reaction chamber (in units, for example particles, litres or kilos per period of time).

Experience shows, for example, that an excessively high feed rate of living microorganisms leads to a steep rise in population in the reaction tank. The increase proceeds until all of the food supply is exhausted. The microorganism population then collapses. Although as a result the organic material is removed from the water, the population of microorganisms is so low that, in the event of a flood of new wastewater containing organic material into the reaction tank, only a slow degradation of the organic material takes place owing to the low population.

If, in contrast, the feed rate of living microorganisms is too small, and more living microorganisms are taken off from the reaction chamber than are generated in the reaction chamber, the population of microorganisms in the reaction chamber decreases in such a manner that again a flood-like addition of large amounts of organic material cannot be promptly processed.

In the event of an excessive feed rate of organically degradable material, in the short term there is a nutrient excess which is followed by an excessively highly growing population of microorganisms. Subsequently, again, a population catastrophe must be expected, that is to say an abrupt collapse in the microorganism population.

If, in contrast, insufficient organic material is fed to the reaction tank, the population of microorganisms can critically decrease because of a nutrient deficiency, if insufficient organic material is present in the wastewater.

Dead or destroyed microorganisms have also proved to be a good nutrient for living microorganisms. An excessively high feed of dead microorganisms can also lead to an excessive increase in population and subsequent population catastrophe.

Overall, by treating the return stream by influencing at least one feed rate from the group feed rate of living microorganisms, feed rate of dead microorganisms and feed rate of organically degradable material, intense fluctuations in the purification capacity of the water treatment plant are avoided. By presetting the intensity and the type of treatment, the biological activity in the reaction tank can be influenced. In particular, population catastrophes or excess population fluctuations can thereby be avoided.

In an embodiment of the inventive process, the treatment presets a first feed rate of the microorganisms fed to the reaction chamber. If the biological activity in the reaction tank is in the subcritical range, that is to say the microorganism population is less than the nutrient supply permits, by presetting the first feed rate the population growth is influenced directly.

In a further embodiment of the inventive process, the treatment presets a second feed rate of the dead microorganisms recirculated from the separation chamber to the reaction chamber. As a result of the recirculation of dead microorganisms, a growth in microorganism population in the reaction chamber is particularly reinforced, since dead microorganisms are a particularly good nutrient for living microorganisms. The feed can stimulate the growth in particular in the case of small population sizes.

In a further embodiment of the inventive process, a third feed rate of the material recirculated to the reaction chamber is preset. The nutrient supply in the reaction space is codetermined via the third feed rate. If, for example, a wastewater rich in organic material is absent for a short time, an appropriately dimensioned feed of organic material from the separation chamber can compensate for the nutrient deficit in the reaction chamber. As a result a population catastrophe in the reaction chamber is avoided, as a result of which the biological activity is made uniform in time and population fluctuations are levelled off.

In order to preset at least one feed rate from the group first feed rate and second feed rate, advantageously a portion of the microorganisms present in the return stream is destroyed. By destroying the living microorganisms, the ratio of living microorganisms to dead microorganisms can be influenced. Depending on the nutrient supply and size of microorganism population in the reaction tank, a certain ratio of living microorganisms to dead microorganisms in the reaction tank leads to an increase or decrease in population.

For example, a small ratio, that is to say a feed of many dead microorganisms to the reaction chamber at a biological activity in the critical range, that is to say when the ratio of the population to the food supply in the reaction tank is just in balance, leads to an increase in population. Although a high ratio, that is to say a feed of many microorganisms but few dead microorganisms, increases the population in the reaction chamber in the short term, the population then collapses owing to the low nutrient supply.

Advantageously, a portion of the microorganisms present in the return stream is destroyed by a biocide, in particular by ozone. The advantage of ozone is that ozone, after fluorine, is the strongest oxidizing agent, but reacts to form comparatively unproblematic oxidation products and oxygen. The oxygen is required anyway in the reaction in the reaction chamber. Furthermore, no salt build up of the treated water occurs as a result of the oxidation with ozone.

Although ozone cannot be stored, it can be produced on site from oxygen in ozone generators. For industrial applications, ozone concentrations of 10 to 14% by weight can be achieved at an energy consumption markedly below 10 kWh/kg of ozone.

Advantageously, the take-off rate of the microorganisms taken off from the reaction chamber and fed to the separation chamber is higher on average over time than the reproduction rate of the microorganisms in the reaction chamber. As a result more microorganisms are taken off from the reaction chamber than are generated as microorganisms by cell division. By appropriate addition of microorganisms in the return stream, that is to say by an appropriate first feed rate, the population in the reaction chamber can be kept by this means in a controlled manner to a certain level. A sufficiently high take off of microorganisms avoids uncontrollable population fluctuations in the reaction chamber in advance.

Advantageously at least one feed rate from the group first feed rate, second feed rate and third feed rate is controlled as a function of the concentration of the microorganisms situated in the reaction chamber. Via the control, the population in the reaction chamber can be controlled.

The control parameter used can either be the first feed rate, that is to say the amount of living microorganisms which are added per unit time to the reaction chamber, or the amount of nutrients in the form of dead microorganisms, that is to say as second feed rate, or in the form of biodegradable material, that is to say as third feed rate. More preferably, a plurality of feed rates are preset and used for the control as a function of the size of population of microorganisms in the reaction tank and nutrient supply in the reaction tank.

It is advantageous if the ozone concentration in the return stream at a feed point is between 20 and 60 g/l, in particular between 30 and 50 g/l, preferably between 40 and 44 g/l. These values relate in particular to return streams in sewage treatment plants having the concentrations of material customary for wastewater treatment plants. Depending on the efficacy of the separation chamber and the material concentration achieved, the ozone concentration is correspondingly higher or lower.

Experience has shown that, depending on concentration of the organically degradable material in the water, between 5 and 30%, in particular between 10 and 20%, of the microorganisms taken off from the separation chamber and fed to the reaction chamber must be destroyed. At this ratio a particularly stable population is achieved in the reaction tank. More advantageously, predominantly microorganisms of low biological activity are destroyed by the biocide and microorganisms having strong biological activity are left alive.

The volumetric flow rate of the water to be treated fed to the reaction chamber is of a magnitude such that the water in the reaction chamber is exchanged in the course of 2 to 6 days, in particular in the course of 3 to 5 days. As a result of such flow rates, a sufficiently high flow with sufficiently good clarifying action is achieved. Customary capacities of the reaction chamber are at least 3 000 m³, in particular at least 5 000 m³, preferably at least 7 000 m³.

To increase the biological activity, organic structures present in the return stream are mechanically or chemically comminuted. A mechanical comminution is performed which alters the organic structures. The addition of oxidizing agents chemically breaks up organic structures and weakens cell walls. The comminution promotes the biological activity in the reaction tank.

To further promote the biological activity, the return stream is conducted in an open circuit. The open circuit increases the residence time and the destruction of the cell structures. Open in this context means that only a portion of the water containing organic material and microorganisms is circulated. The open circuit is achieved via an additional line which is connected at both its ends to a return line for the return stream. In this case preferably the size of the circuit is at least twice, in particular at least three times, preferably four times as great as the return stream. The circuit increases the residence time of the return stream in the return line and flock structures are comminuted. As a result it is possible to dissolve the entire amount of oxidizing agent in the medium.

Advantageously, in the reaction tank, the organic material content in the water is kept at 3 to 5 g/l, in particular is controlled to 3 to 5 g/l. This concentration of organic material achieves a particularly efficient and stable biological activity in the reaction tank.

In the separation chamber, advantageously, the content of organic material in the water is controlled to 6 to 20 g/l averaged over space. It is advantageous if the ozone concentration is such that vital microorganisms in the return stream remain alive and weak microorganisms die off.

In a special embodiment of the invention, the separation chamber used is a settling tank. The use of membrane systems for separating sludge from water in the separation chamber is also expedient. Using a settling tank, the organic material and the microorganisms are separated in a simple and inexpensive manner from the water.

The inventive treatment plant for treating water, in particular a sewage treatment plant for wastewater, having a reaction chamber for the biodegradation of biodegradable material by microorganisms and a separation chamber for at least partial separation of the biodegradable material and the microorganisms from water, the reaction chamber and the separation chamber being connected by a feed line for water containing microorganisms and biodegradable material, and a return line for degradable material and microorganisms, is characterized by a treatment means for treating a return stream from the separation chamber to the reaction chamber.

Via the feed line for water containing microorganisms and biodegradable material, starting from the reaction chamber to the separation chamber, water and microorganisms and organically degradable material are taken off from the reaction chamber and fed to the separation chamber. The return line takes off from the separation chamber water enriched with microorganisms and biodegradable material and feeds this to the reaction chamber.
The treatment means treats the return stream and thus influences the growth or size of population of microorganisms in the reaction chamber.

In an embodiment of the invention, the treatment means has a metering means for presetting a first feed rate of the microorganisms taken off from the separation chamber and fed to the reaction chamber. The metering means thus determines the first feed rate. The mode of functioning of the metering means can be either by physical separation of the microorganisms present in the return stream or by chemical destruction of the microorganisms, or by biological inoculation with suitable strains of microorganisms.

In a further embodiment of the invention, the treatment means has a metering means for presetting a second feed rate of the dead microorganisms fed to the reaction chamber. In accordance with the metering means for presetting the first feed rate, the second feed rate can be preset in various ways.

In a further embodiment of the invention, the treatment means has a metering means for presetting a third feed rate of the material taken off from the separation chamber and fed to the reaction chamber. Via this metering means, the nutrient feed to the reaction chamber is determined.

Advantageously, the metering means comprises a feed point for a biocide in the return line. A suitable biocide is, for example, ozone. Alternatively, the biocide used is other bacteriological strains which affect the microorganisms in the reaction tank.

Advantageously the feed point comprises a vacuum pump.

Using the vacuum pump, in a simple manner, gases, for example ozone or carbon dioxide, can be introduced into the return stream.

In an advantageous embodiment of the inventive treatment plant, the metering means comprises a sensor for determining at least one concentration from the group concentration of the living microorganisms situated in the reaction chamber, concentration of the dead microorganisms situated in the reaction chamber and concentration of the organically degradable material situated in the reaction chamber. Using the sensor and the metering means, the microorganism population in the reaction chamber is controlled. The sensor contributes to monitoring the biological activity in the reaction chamber.

In a special embodiment of the invention, at least one additional line is connected via both its ends to the return line. The additional line generates an open circuit in the return line by which flock structures in the return stream can be destroyed. A pump in the additional line contributes to maintaining the circuit.

Advantageously, the separation chamber is a settling tank. It is advantageous if the separation chamber has a membrane system for separating sludge and water.

To comminute flock structures and to promote the biological activity in the reaction chamber, a mechanical comminuter is provided in the return line. Comminuting the biodegradable material achieves a higher surface area and leads to more rapid degradation of the biological material.

The capacity of the reaction chamber is advantageously at least 1 000 m³, in particular at least 6 000 m³.

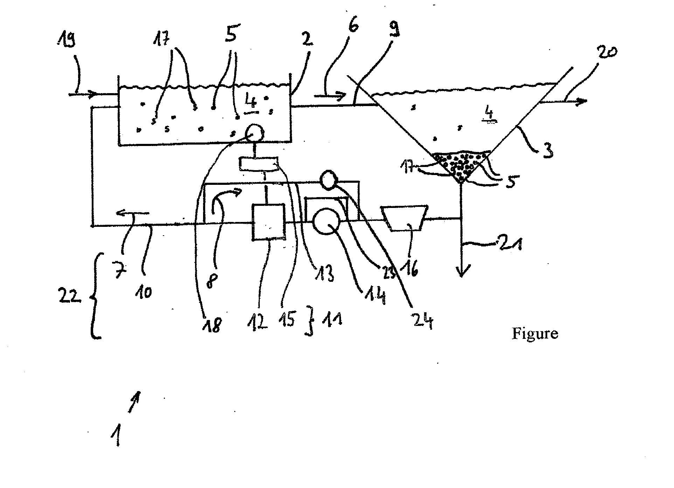

Further advantages and embodiments will be explained with reference to the drawing below.

The figure shows diagrammatically a treatment plant 1 for treating water 4 having a reaction chamber 2 and a separation chamber 3. Water to be treated is fed via a wastewater inlet 19 to the reaction chamber 2. In the reaction chamber 2 the water 4 containing the biodegradable material 5 is mixed together with microorganisms 17 which feed on the biodegradable material 5 and decompose this.

The reaction chamber 2 is connected via a feed line 9 to the separation chamber 3. A portion of the water 4 containing biodegradable material 5 and microorganisms 17 is fed via the feed line 9 as water stream 6 to the separation chamber 3. In the separation chamber 3 the water 4 is separated from the organic material 5 and the microorganisms 17. The material 5 and the microorganisms 17 settle as sewage sludge at the bottom of the separation chamber 13. The water 4 thus essentially freed from the material 5 and microorganisms 17 is taken off via a clean water outlet 20.

The material 5 settled in the separation chamber 3 is recirculated as return stream 7 together with remaining water and the microorganisms 17 in a return line 10 after a treatment by a treatment means 22 to the reaction chamber 2. For this the biodegradable material 5 and the microorganisms 17 are comminuted by a comminuter 16 and then the return stream 7 is admixed with ozone at a feed point 12.

In the return line 10, to transport the return stream 7 a pump 14 is provided. For further comminution of the organic material 5 a mixing line 23 is present in which water 4 containing organically degradable material 5 and microorganisms 17 is circulated. This additional mixing leads to further comminution of the flock structures.

The return stream 7 is admixed at a feed point 12 with ozone whose addition is determined by a control unit 15 as a function of the density of microorganisms 17 in the reaction chamber 2 measured by a sensor 18. The sensor 18, the control unit 15 and the feed point 12 together form a metering means 11 by which a first feed rate of living microorganisms which are added to the reaction tank 2 can be preset. Suitable presetting of the intensity of treatment of the return stream 7 means that a majority of the sewage sludge arising in the separation space 3 is eliminated by the microorganisms 17 in the form of biodegradable material 5 or in the form of microorganisms 17. The running costs of a sewage treatment plant are lower due to the lower amounts of special waste to be disposed of which are produced.

An additional line 13 containing a pump 24 ensures a further circuit 8 which achieves particularly good mixing of the water 4 with the ozone and a comminution of the remaining cell structures. A residual sludge outlet 21 removes residual sludge from the separation chamber 3 and the return line 10.

The return line 10 for the return stream 7; the residual sludge outlet 21; the pump 14; the comminuter 16; the mixing line 23; the additional line 13 for the open circuit 8 containing the pump 24; the metering means 11 comprising the sensor 18, the control unit 15 and the feed point 12 form in their entirety a treatment means 22.

Open-loop or closed-loop control of the interaction of the individual components determines the intensity of the treatment of the return stream 7. A balanced population in the reaction chamber 2 which is even over time and not subject to great fluctuations is achieved.

The inventive process for treating water 4 in a treatment plant 1, in particular wastewater in a sewage treatment plant, having a reaction chamber 2 in which a biodegradable material present in the water 4 is at least partially biodegraded by microorganisms 17 and a separation chamber 3 in which the biodegradable material 5 and the microorganisms 17 are at least partially separated from the water 4, a water stream 6 containing microorganisms 17 and biodegradable material 5 flowing from the reaction chamber 2 to the separation chamber 3, is characterized in that a return stream 7 containing biodegradable material 5 and a portion of the microorganisms 17 flows from the separation chamber 3 to the reaction chamber 2 and the return stream 7 is subjected to a treatment whose intensity is preset.

The inventive process and the inventive treatment plant for carrying out the inventive process are distinguished by a decrease in the sewage sludge produced and provide a particularly inexpensive process for treating water.

### List of designations

- 1: Treatment plant
- 2: Reaction chamber
- 3: Separation chamber
- 4: Water
- 5: Material
- 6: Water stream
- 7: Return stream
- 8: Circuit
- 9: Feed line
- 10: Return line
- 11: Metering means
- 12: Feed point
- 13: Additional line
- 14: Pump
- 15: Control unit
- 16: Comminuter
- 17: Microorganisms
- 18: Sensor
- 19: Wastewater inlet
- 20: Clean water outlet
- 21: Residual sludge outlet
- 22: Treatment means
- 23: Mixing line
- 24: Pump

## Claims

1. Process for treating water (4) in a treatment plant (1), in particular wastewater in a sewage treatment plant, having a reaction chamber (2) in which a biodegradable material (5) present in the water (4) is at least partially biodegraded by microorganisms (17) and having a separation chamber (3) in which the biodegradable material (5) and the microorganisms (17) are at least partially separated from the water (4), a water stream (6) containing microorganisms (17) and biodegradable material (5) flowing from the reaction chamber (2) to the separation chamber (3),
**characterized in that** a return stream (7) containing biodegradable material (5) and
microorganisms (17) flows from the separation chamber (3) to the reaction chamber (2) and the return stream (7) is subjected to a treatment in which a portion of the microorganisms (17) situated in the return stream (7) is destroyed by a biocide, in particular by ozone, forming dead microorganisms, the intensity of the treatment being preset to preset at least one feed rate from the group :
- a first feed rate of the living microorganisms recirculated from the separation chamber (3) to the reaction chamber (2),
- a second feed rate of the dead microorganisms (17) recirculated from the separation chamber (3) to the reaction chamber (2),
- a third feed rate of the biodegradable material (5) recirculated from the separation chamber (3) to the reaction chamber (2),
at least one feed rate from the group consisting of the first feed rate and second feed rate being preset by a portion of the living microorganisms (17) situated in the return stream (7) being destroyed.

2. Process according to claim 1, **characterized in that** at least one feed rate from the group consisting of the first feed rate, second feed rate and third feed rate is controlled as a function of the concentration of the living microorganisms (17) situated in the reaction chamber (2).

3. Process according to one of the preceding claims, **characterized in that** the ozone concentration in the return stream (7) at a feed point (12) is between 20 and 60 g/l, in particular between 30 and 50 g/l, preferably between 40 and 44 g/l.

4. Process according to one of the preceding claims, **characterized in that** between 5 and 30%, in particular between 10 and 20%, of the microorganisms (17) taken off from the separation chamber (3) and fed to the reaction chamber (2) are destroyed

5. Process according to one of the preceding claims, **characterized in that** a volumetric flow rate of water (4) to be treated is fed to the reaction chamber (2) in a magnitude such that the water (4) in the reaction chamber (2) is exchanged in the course of 2 to 6 days, in particular in the course of 3 to 5 days.

6. Process according to one of the preceding claims, **characterized in that** the return stream is such that the water (4) in the reaction chamber (2) is exchanged in the course of 0.5 to 4 days, in particular in the course of 1 to 3 days.

7. Process according to one of the preceding claims, **characterized in that** flock and cell structures present in the return stream (7) are mechanically or chemically comminuted.

8. Process according to one of the preceding claims, **characterized in that** the return stream (7) is conducted in an open circuit (8) in which only a portion of the water containing biodegradable material and microorganisms is circulated, to increase the residence time and to destroy cell structures.

9. Process according to one of the preceding claims, **characterized in that**, in the reaction tank, the content of organic dry matter in the water (4) is controlled to 3 to 5 g/l.

10. Process according to one of the preceding claims, **characterized in that**, in the separation chamber (3), the content of biodegradable material (5) in the water (4) is controlled to 6 to 20 g/l averaged over space.

11. Process according to one of the preceding claims, **characterized in that** the separation chamber (3) used is a settling tank and/or in the separation chamber (3) a membrane system is used for separating sludge and water.

12. Treatment plant (1) for treating water (4), in particular a sewage treatment plant for wastewater, having :
- a reaction chamber (2) for the biodegradation of biodegradable material (5) by microorganisms (17) and
- a separation chamber (3) for at least partial separation of the biodegradable material (5) and the microorganisms (17) from the water (4),
- the reaction chamber (2) and the separation chamber (3) being connected by a feed line (9) for water (4) containing microorganisms (17) and biodegradable material (5),
- and a return line (10) for biodegradable material (5) and microorganisms (17),
**characterized by**
- a treatment means (22) for treating a return stream (7) from the separation chamber (3) to the reaction chamber (2); the treatment means (22) having a metering means (11) for presetting at least one of the following rates :
- a first feed rate of the living microorganisms recirculated from the separation chamber (3) to the reaction chamber (2),
- a second feed rate of the dead microorganisms (17) recirculated from the separation chamber (3) to the reaction chamber (2),
- a third feed rate of the biodegradable material (5) recirculated from the separation chamber (3) to the reaction chamber (2),
the metering means (11) comprising a feed point (12) for biocide, in particular ozone, in the return line (10,7).

13. Treatment plant (1) according to Claim 12, **characterized in that** the feed point (12) comprises a vacuum pump.

14. Treatment plant (1) according to Claim 12 or 13, **characterized in that** the metering means (11) comprises a sensor (18) for determining at least one concentration from the group consisting in the concentration of the living microorganisms (17) present in the reaction chamber (2), the concentration of the dead microorganisms present in the reaction chamber (2) and the concentration of the organically biodegradable material (5) present in the reaction chamber (2).

15. Treatment plant (1) according to one of Claims 12 to 14, **characterized in that** at least one additional line (13) is connected via both its ends to the return line (10).

16. Treatment plant (1) according to claim 15, **characterized in that** a pump (14) for generating a circuit (12) is present in the additional line (13).

17. Treatment plant (1) according to one of Claims 12 to 16, **characterized in that** the separation chamber (3) is a settling tank and/or **in that** the separation chamber (3) has a membrane system for separating water and sludge.

18. Treatment plant (1) according to one of Claims 12 to 17, **characterized in that** a mechanical comminuter (16) is provided in the return line (10).

19. Treatment plant (1) according to one of Claims 12 to 18, **characterized in that** the capacity of the reaction chamber (2) is at least 1 000 m³, in particular at least 6 000 m³.

## Patentansprüche

1. Verfahren zum Behandeln von Wasser (4) in einer Kläranlage (1), besonders von Abwasser in einer Abwasserkläranlage, die ein Reaktionsbecken (2) umfasst, in dem ein im Wasser (4) vorhandenes biologisch abbaubares Material (5) wenigstens zum Teil von Mikroorganismen (17) abgebaut wird, und ein Trennbecken (3), in dem das biologisch abbaubare Material (5) und die Mikroorganismen (17) wenigstens zum Teil vom Wasser (4) getrennt werden, wobei ein Wasserlauf (6), der Mikroorganismen (17) und biologisch abbaubares Material (5) enthält, vom Reaktionsbecken (2) zum Trennbecken (3) fließt, **dadurch gekennzeichnet, dass** ein Rücklauf (7), der biologisch abbaubares Material (5) und Mikroorganismen (17) enthält, vom Trennbecken (3) zum Reaktionsbecken (2) fließt und der Rücklauf (7) einer Behandlung unterzogen wird, bei der ein Teil der Mikroorganismen (17), die sich im Rücklauf (7) befinden, durch ein Biozid, insbesondere durch Ozon, zerstört wird, wobei tote Mikroorganismen gebildet werden, wobei die Intensität der Behandlung voreingestellt ist, um wenigstens eine Einleitungsrate aus der folgenden Gruppe voreinzustellen:
- eine erste Einleitungsrate der lebenden Mikroorganismen, die vom Trennbecken (3) zum Reaktionsbecken (2) zurückgeführt werden,
- eine zweite Einleitungsrate der toten Mikroorganismen (17), die vom Trennbecken (3) zum Reaktionsbecken (2) zurückgeführt werden,
- eine dritte Einleitungsrate des biologisch abbaubaren Materials (5), das vom Trennbecken (3) zum Reaktionsbecken (2) zurückgeführt wird,
wobei wenigstens eine Einleitungsrate aus der Gruppe bestehend aus der ersten Einleitungsrate und der zweiten Einleitungsrate von einem Teil der lebenden Mikroorganismen (17), die im Rücklauf (7) zerstört werden, voreingestellt werden.

2. Verfahren nach Anspruch 1, **dadurch gekennzeichnet, dass** wenigstens eine Einleitungsrate aus der Gruppe bestehend aus der ersten Einleitungsrate, der zweiten Einleitungsrate und der dritten Einleitungsrate in Abhängigkeit von der Konzentration der lebenden Mikroorganismen (17) im Reaktionsbecken (2) geregelt wird.

3. Verfahren nach einem der vorhergehenden Ansprüche, **dadurch gekennzeichnet, dass** die Ozonkonzentration im Rücklauf (7) an einem Einleitungspunkt (12) zwischen 20 und 60 g/L, insbesondere zwischen 30 und 50 g/L, bevorzugt zwischen 40 und 44 g/L liegt.

4. Verfahren nach einem der vorhergehenden Ansprüche, **dadurch gekennzeichnet, dass** zwischen 5 und 30 %, insbesondere zwischen 10 und 20 % der Mikroorganismen (17), die aus dem Trennbecken (3) entnommen und in das Reaktionsbecken (2) eingeleitet wurden, zerstört werden.

5. Verfahren nach einem der vorhergehenden Ansprüche, **dadurch gekennzeichnet, dass** ein Volumenstrom von zu behandelndem Wasser (4) in einer Größenordnung in das Reaktionsbecken (2) eingeleitet wird, bei der das Wasser (4) im Reaktionsbecken (2) innerhalb von 2 bis 6 Tagen, insbesondere innerhalb von 3 bis 5 Tagen, ausgetauscht wird.

6. Verfahren nach einem der vorhergehenden Ansprüche, **dadurch gekennzeichnet, dass** der Rücklauf derart ist, dass das Wasser (4) im Reaktionsbecken (2) innerhalb von 0,5 bis 4 Tagen, insbesondere innerhalb von 1 bis 3 Tagen, ausgetauscht wird.

7. Verfahren nach einem der vorhergehenden Ansprüche, **dadurch gekennzeichnet, dass** im Rücklauf (7) enthaltene Flocken- und Zellstrukturen mechanisch oder chemisch zerkleinert werden.

8. Verfahren nach einem der vorhergehenden Ansprüche, **dadurch gekennzeichnet, dass** der Rücklauf (7) in einem offenen Kreislauf (8) durchgeführt wird, in dem nur ein Teil des Wassers, das biologisch abbaubares Material und Mikroorganismen enthält, zirkuliert wird, um die Verweilzeit zu erhöhen und Zellstrukturen zu zerstören.

9. Verfahren nach einem der vorhergehenden Ansprüche, **dadurch gekennzeichnet, dass** im Reaktionstank der Gehalt an organischer Trockensubstanz im Wasser (4) auf 3 bis 5 g/L geregelt wird.

10. Verfahren nach einem der vorhergehenden Ansprüche, **dadurch gekennzeichnet, dass** im Trennbecken (3) der Gehalt an biologisch abbaubarem Material (5) im Wasser (4) auf 6 bis 20 g/L, gemittelt über den Raum, geregelt wird.

11. Verfahren nach einem der vorhergehenden Ansprüche, **dadurch gekennzeichnet, dass** das verwendete Trennbecken (3) ein Absetzbecken ist und/oder dass im Trennbecken (3) ein Membransystem zum Trennen von Klärschlamm und Wasser verwendet wird.

12. Kläranlage (1) zum Behandeln von Wasser (4), insbesondere eine Abwasserkläranlage für Abwasser, die Folgendes umfasst:
- ein Reaktionsbecken (2) zum Abbau von biologisch abbaubarem Material (5) durch Mikroorganismen (17) und
- ein Trennbecken (3) für das wenigstens teilweise Trennen des biologisch abbaubaren Materials (5) und der Mikroorganismen (17) vom Wasser (4),
- wobei das Reaktionsbecken (2) und das Trennbecken (3) durch eine Zuleitung (9) für Mikroorganismen (17) und biologisch abbaubares Material (5) enthaltendes Wasser (4) verbunden sind,
- und eine Rücklaufleitung (10) für biologisch abbaubares Material (5) und Mikroorganismen (17),
**gekennzeichnet durch**
- ein Mittel (22) zum Behandeln eines Rücklaufs (7) vom Trennbecken (3) zum Reaktionsbecken (2); wobei das Behandlungsmittel (22) ein Messmittel (11) zum Voreinstellen wenigstens einer der folgenden Raten aufweist:
- eine erste Einleitungsrate der lebenden Mikroorganismen, die aus dem Trennbecken (3) in das Reaktionsbecken (2) zurückgeführt werden,
- eine zweite Einleitungsrate der toten Mikroorganismen (17), die aus dem Trennbecken (3) in das Reaktionsbecken (2) zurückgeführt werden,
- eine dritte Einleitungsrate des biologisch abbaubaren Materials (5), das aus dem Trennbecken (3) in das Reaktionsbecken (2) zurückgeführt wird,
wobei das Messmittel (11) einen Einleitungspunkt (12) für Biozide, insbesondere Ozon, in die Rücklaufleitung (10, 7) aufweist.

13. Kläranlage (1) nach Anspruch 12, **dadurch gekennzeichnet, dass** der Einleitungspunkt (12) eine Vakuumpumpe aufweist.

14. Kläranlage (1) nach Anspruch 12 oder 13, **dadurch gekennzeichnet, dass** das Messmittel (11) einen Sensor (18) zum Bestimmen wenigstens einer Konzentration aus der Gruppe bestehend aus der Konzentration der lebenden Mikroorganismen (17) im Reaktionsbecken (2), der Konzentration der toten Mikroorganismen im Reaktionsbecken (2) und der Konzentration des biologisch abbaubaren Materials (5) im Reaktionsbecken (2) aufweist.

15. Kläranlage (1) nach einem der Ansprüche 12 bis 14, **dadurch gekennzeichnet, dass** wenigstens eine zusätzliche Leitung (13) mit ihren beiden Enden an die Rücklaufleitung (10) angeschlossen ist.

16. Kläranlage (1) nach Anspruch 15, **dadurch gekennzeichnet, dass** in der zusätzlichen Leitung (13) eine Pumpe (14) zum Erzeugen eines Kreislaufs (12) vorhanden ist.

17. Kläranlage (1) nach einem der Ansprüche 12 bis 16, **dadurch gekennzeichnet, dass** das Trennbecken (3) ein Absetzbecken ist und/oder dass das Trennbecken (3) ein Membransystem zum Trennen von Wasser und Klärschlamm aufweist.

18. Kläranlage (1) nach einem der Ansprüche 12 bis 17, **dadurch gekennzeichnet, dass** ein mechanisches Zerkleinerungsmittel (16) in der Rücklaufleitung (10) bereitgestellt ist.

19. Kläranlage (1) nach einem der Ansprüche 12 bis 18, **dadurch gekennzeichnet, dass** das Fassungsvermögen des Reaktionsbeckens (2) wenigstens 1000 m³, insbesondere wenigstens 6000 m³ beträgt.

## Revendications

1. Procédé de traitement de l'eau (4) dans une usine de traitement (1), en particulier des eaux usées dans une usine de traitement des eaux d'égout, ayant une chambre de réaction (2) dans laquelle une matière biodégradable (5) présente dans l'eau (4) est au moins partiellement biodégradée par des micro-organismes (17) et ayant une chambre de séparation (3) dans laquelle la matière biodégradable (5) et les micro-organismes (17) sont au moins partiellement séparés de l'eau (4), un courant d'eau (6) contenant des micro-organismes (17) et la matière biodégradable (5) s'écoulant de la chambre de réaction (2) à la chambre de séparation (3),
**caractérisé en ce qu'**un courant de retour (7) contenant la matière biodégradable (5) et les micro-organismes (17) s'écoule de la chambre de séparation (3) à la chambre de réaction (2) et le courant de retour (7) est soumis à un traitement dans lequel une partie des micro-organismes (17) situés dans le courant de retour (7) est détruite par un biocide, en particulier par l'ozone, formant des micro-organismes morts, l'intensité du traitement étant préétablie pour préétablir au moins un débit d'alimentation dans le groupe consistant en :
- un premier débit d'alimentation des micro-organismes vivants recyclés de la chambre de séparation (3) à la chambre de réaction (2),
- un deuxième débit d'alimentation des micro-organismes morts (17) recyclés de la chambre de séparation (3) à la chambre de réaction (2),
- un troisième débit d'alimentation de la matière biodégradable (5) recyclée de la chambre de séparation (3) à la chambre de réaction (2),
au moins un débit d'alimentation dans le groupe consistant en le premier débit d'alimentation et le deuxième débit d'alimentation étant préétabli par une partie des micro-organismes vivants (17) situés dans le courant de retour (7) qui sont détruits.

2. Procédé selon la revendication 1, **caractérisé en ce qu'**au moins un débit d'alimentation dans le groupe consistant en le premier débit d'alimentation, le deuxième débit d'alimentation et le troisième débit d'alimentation est régulé en fonction de la concentration des micro-organismes vivants (17) situés dans la chambre de réaction (2).

3. Procédé selon l'une des revendications précédentes, **caractérisé en ce que** la concentration en ozone dans le courant de retour (7) au niveau d'un point d'alimentation (12) est entre 20 et 60 g/L, en particulier entre 30 et 50 g/L, de préférence entre 40 et 44 g/L.

4. Procédé selon l'une des revendications précédentes, **caractérisé en ce qu'**entre 5 et 30 %, en particulier entre 10 et 20 %, des micro-organismes (17) prélevés de la chambre de séparation (3) et délivrés à la chambre de réaction (2) sont détruits.

5. Procédé selon l'une des revendications précédentes, **caractérisé en ce qu'**un débit volumétrique d'eau (4) devant être traitée est délivré à la chambre de réaction (2) dans une grandeur telle que l'eau (4) dans la chambre de réaction (2) est échangée en 2 à 6 jours, en particulier en 3 à 5 jours.

6. Procédé selon l'une des revendications précédentes, **caractérisé en ce que** le courant de retour est tel que l'eau (4) dans la chambre de réaction (2) est échangée en 0,5 à 4 jours, en particulier en 1 à 3 jours.

7. Procédé selon l'une des revendications précédentes, **caractérisé en ce que** des structures de flocs et de cellules présentes dans le courant de retour (7) sont dilacérées mécaniquement ou chimiquement.

8. Procédé selon l'une des revendications précédentes, **caractérisé en ce que** le courant de retour (7) est conduit dans un circuit ouvert (8) dans lequel uniquement une partie de l'eau contenant la matière biodégradable et des micro-organismes est mise en circulation, afin d'améliorer le temps de séjour et de détruire les structures de cellules.

9. Procédé selon l'une des revendications précédentes, **caractérisé en ce que**, dans la cuve de réaction, la teneur en matière sèche organique dans l'eau (4) est régulée à 3 à 5 g/L.

10. Procédé selon l'une des revendications précédentes, **caractérisé en ce que**, dans la chambre de séparation (3), la teneur en matière biodégradable (5) dans l'eau (4) est régulée à 6 à 20 g/L en moyenne dans l'espace.

11. Procédé selon l'une des revendications précédentes, **caractérisé en ce que** la chambre de séparation (3) utilisée est une cuve de décantation et/ou dans la chambre de séparation (3) un système de membrane est utilisé pour séparer la boue et l'eau.

12. Usine de traitement (1) destinée à traiter de l'eau (4), en particulier une usine de traitement des eaux d'égout pour les eaux usées, comprenant :
- une chambre de réaction (2) destinée à la biodégradation de matière biodégradable (5) par des micro-organismes (17) et
- une chambre de séparation (3) destinée à la séparation au moins partielle de la matière biodégradable (5) et des micro-organismes (17) de l'eau (4),
- la chambre de réaction (2) et la chambre de séparation (3) étant raccordées par un conduit d'alimentation (9) pour l'eau (4) contenant des micro-organismes (17) et la matière biodégradable (5),
- et une conduite de retour (10) pour la matière biodégradable (5) et les micro-organismes (17),
**caractérisé par**
- un moyen de traitement (22) destiné à traiter un courant de retour (7) de la chambre de séparation (3) à la chambre de réaction (2) ; le moyen de traitement (22) ayant un moyen de mesure (11) destiné à préétablir au moins l'un des débits suivants :
- un premier débit d'alimentation des micro-organismes vivants recyclés de la chambre de séparation (3) à la chambre de réaction (2),
- un deuxième débit d'alimentation des micro-organismes morts (17) recyclés de la chambre de séparation (3) à la chambre de réaction (2),
- un troisième débit d'alimentation de la matière biodégradable (5) recyclée de la chambre de séparation (3) à la chambre de réaction (2),
le moyen de mesure (11) comprenant un point d'alimentation (12) pour le biocide, en particulier l'ozone, dans la conduite de retour (10, 7).

13. Usine de traitement (1) selon la revendication 12, **caractérisée en ce que** le point d'alimentation (12) comprend une pompe à vide.

14. Usine de traitement (1) selon la revendication 12 ou 13, **caractérisée en ce que** le moyen de mesure (11) comprend un capteur (18) destiné à déterminer au moins une concentration dans le groupe consistant en la concentration des micro-organismes vivants (17) présents dans la chambre de réaction (2), la concentration des micro-organismes morts présents dans la chambre de réaction (2) et la concentration de la matière organiquement biodégradable (5) présente dans la chambre de réaction (2).

15. Usine de traitement (1) selon l'une des revendications 12 à 14, **caractérisée en ce qu'**au moins une conduite supplémentaire (13) est raccordée par ses deux extrémités à la conduite de retour (10).

16. Usine de traitement (1) selon la revendication 15, **caractérisée en ce qu'**une pompe (14) destinée à générer un circuit (12) est présente dans la conduite supplémentaire (13).

17. Usine de traitement (1) selon l'une des revendications 12 à 16, caractérisée en ce la chambre de séparation (3) est une cuve de décantation et/ou en ce que la chambre de séparation (3) comprend un système de membrane destiné à séparer l'eau et la boue.

18. Usine de traitement (1) selon l'une des revendications 12 à 17, **caractérisée en ce qu'**un dilacérateur mécanique (16) est fourni dans la conduite de retour (10).

19. Usine de traitement (1) selon l'une des revendications 12 à 18, **caractérisée en ce que** la capacité de la chambre de réaction (2) est d'au moins 1 000 m³, en particulier d'au moins 6 000 m³.
